# EUROPÄISCHE PATENTSCHRIFT

(11) **EP 0 817 975 B1**
(45) Veröffentlichungstag und Bekanntmachung des Hinweises auf die Patenterteilung: **25.08.1999**
(21) Anmeldenummer: 96902284.7
(22) Anmeldetag: 21.02.1996
(51) Int. Cl.: G01R 31/317, G06F 11/16

(54) **VERFAHREN UND SCHALTUNGSANORDNUNG ZUR ÜBERWACHUNG EINER DATENVERARBEITUNGSSCHALTUNG**
PROCESS AND CIRCUIT FOR MONITORING A DATA PROCESSING CIRCUIT
PROCEDE ET CIRCUIT POUR LE CONTROLE D'UN CIRCUIT DE TRAITEMENT DE DONNEES

(30) Priorität: 31.03.1995 DE 19511842
(43) Veröffentlichungstag der Anmeldung: 14.01.1998
(73) Patentinhaber: Continental Teves AG & Co. oHG, 60488 Frankfurt (DE)
(72) Erfinder: ZYDEK, Michael, D-35428 Langgöns (DE); FEY, Wolfgang, D-65527 Niedernhausen (DE); ZINKE, Olaf, D-65719 Hofheim (DE); ENGELMANN, Mario, D-61449 Steinbach (DE)
(86) Internationale Anmeldenummer: EP9600704
(87) Internationale Veröffentlichungsnummer: WO9630775

(56) Entgegenhaltungen:
- EP-A- 0 496 509
- EP-A- 0 645 711

## Beschreibung

Die Erfindung bezieht sich auf ein Verfahren zur Überwachung einer Datenverarbeitungsschaltung, die zwei oder mehrere, durch Datenleitungen verbundene Datenverarbeitungssysteme, wie Microprozessoren, Microcomputer oder dergl., enthält, wobei in den Datenverarbeitungssystemen gewonnene Daten einer Überwachungsschaltung zugeführt werden. Schaltungsanordnungen zur Durchführung des verfahrens gehören ebenfalls zur Erfindung.

Aus der EP 0 496 509 A1 ist bereits ein derartiges Verfahren und eine Schaltungsanordnung bekannc. In dieser Schrift ist ein Regelsystem für ein Antiblockiersystem beschrieben, das zwei komplette Regelprozessoren enthält, denen die Eingangssignale des Regelungssystems parallel zugeführt werden. Die Eingangsdaten werden redundant verarbeitet. In einem weiteren Prozessor werden Daten der beiden Regelprozessoren korreliert, um Fehlfunktionen zu erkennen.

Die ordnungsgemäße, fehlerfreie Funktion von Datenverarbeitungsschaltungen, zu denen Microprozessoren, Microcomputer und andere programmgesteuerte Schaltungssysteme zählen, muß bekanntlich überwacht werden. Dies gilt insbesondere dann, wenn diese Schaltungen Bestandteile von sicherheitskritischen Regelungssystemen sind. Ein Beispiel für eine sicherheitskritische Anwendung ist der regelnde Eingriff in die Bremsanlage eines Kraftfahrzeugs, z.B. zur Blockierschutzregelung, Antriebsschlupfregelung oder Fahrstabilitätsregelung. Beim Erkennen einer Fehlfunktion der Datenverarbeitungsschaltung wird die Regelung abgeschaltet oder in eine trotz des aufgetretenen Fehlers noch mögliche, für die Sicherheit weniger kritische Arbeitsweise umgeschaltet.

Für solche überwachungsmaßnahmen ist es wichtig, daß die Fehlfunktion schnell und mit hoher Zuverlässigkeit erkannt wird. Um dies zu erreichen, werden bei einer Regelschaltung, die aus der DE 32 34 637 C2 bekannt ist, die mit Radsensoren gewonnenen Eingangsdaten in zwei parallelen, voneinander unabhängigen, identisch aufgebauten und identisch programmierten Microcontrollern verarbeitet. Die Ausgangssignale der beiden Microcontroller werden dann auf Übereinstimmung überprüft. Treten Abweichungen auf, die auf eine Fehlfunktion hinweisen, wird die elektronische Regelung abgeschaltet und dadurch die Aufrechterhaltung der Bremsenfunktion sichergestellt. Diese bekannte Regelschaltung beruht also auf einer redundanten Datenverarbeitung in zwei kompletten Systemen, wobei die Redundanz allein dem Zweck dient, auftretende Fehler mit hoher Zuverlässigkeit zu erkennen, um in diesem Falle die Regelung abschalten zu können. Die Überwachungsschaltung zum Erkennen und Auswerten der auftretenden Abweichungen und die Abschalt-Elektronik sind ebenfalls weitgehend redundant aufgebaut. Aus Sicherheitsgründen wird also ein erheblicher Aufwand in Kauf genommen.

Ferner ist aus der DE 41 37 124 A1 eine Schaltungsanordnung bekannt, bei der die Eingangssignale in zwei parallelen, jedoch unterschiedlich aufgebauten und programmierten Microcontrollern verarbeitet werden. Nur einer der beiden Microcontroller führt die vollständige, aufwendige Signalverarbeitung aus. Der zweite Microcontroller dient vornehmlich zur Überwachung, weshalb die Eingangssignale nach Aufbereitung und Bildung von zeitlichen Ableitungen auf Basis vereinfachter Regelalgorithmen und vereinfachter Regelphilosophie weiterverarbeitet werden. Im Vergleich zu der zuvor genannten bekannten Schaltung wird durch die vereinfachte Datenverarbeitung in dem Überwachungs-Microcontroller der Aufwand verringert.

Grundsätzlich ist es heutzutage auch möglich, mehrere komplette Datenverarbeitungssysteme, z.B. zwei Microcomputer, auf einem einzigen Chip unterzubringen, beide mit den gleichen Eingangsinformationen zu versorgen und zur Überwachung der ordnungsgemäßen Funktion die Datenverarbeitungsergebnisse der beiden Systeme miteinander zu vergleichen. Bei einer solchen konstruktiven Verknüpfung der elektronischen Systeme läßt sich jedoch nicht mit ausreichend hoher Sicherheit ausschließen, daß bei bestimmten Schaltungsfehlern oder bei einer auf beide Systeme gleichermaßen einwirkenden Störung auch dann ein korrektes Überwachungssignal entsteht, wenn ein Fehler vorliegt.

Bei einer Schaltung auf Basis eines einzigen Datenverarbeitungssystems in Verbindung mit einer Überwachung der herkömmlichen Art läßt sich erst recht kein ausreichend sicheres Erkennen von Fehlfunktionen erwarten.

Schließlich ist aus der DE 40 04 782 A1 bereits ein Antiblockiersystem mit zwei Microcontrollern bekannt, die beide jeweils ein Überwachungssignal erzeugen, das ein Wechselsignal mit vorgegebener Frequenz und vorgegebenem Verlauf darstellt. Ein Sicherheitsschaltkreis vergleicht die Wechselsignale mit einer Zeitnormalen, die von einem Taktgeber abgeleitet ist, welcher von dem Arbeitstakt der Microcontroller unabhängig ist. Eine Veränderung des Wechselsignals führt, ebenso wie ein Ausfall der Zeitnormalen, zur Abschaltung der Blockierschutzregelung. Fallen die Pulse aus dem vorgegebenen Zeitfenster, wird die Regelung abgeschaltet. Auch diese Schaltung beruht also auf der Verwendung von zwei redundant arbeitenden Microcontrollern.

Der vorliegenden Erfindung liegt nun die Aufgabe zugrunde, eine Datenverarbeitungsschaltung, die zwei oder mehrere auf einem einzigen Chip untergebrachte Prozessoren oder andere Datenverarbeitungssysteme umfaßt, zu überwachen und dabei zu erreichen, daß Fehlfunktionen mit hoher Sicherheit und Zuverlässigkeit erkannt und signalisiert werden. Außerdem sollte der Aufwand zur Realisierung des Verfahrens und der entsprechenden Schaltung möglichst gering sein.

Es hat sich gezeigt, daß diese Aufgabe mit den im Anspruch 1 beschriebenen Verfahren gelöst werden kann. Danach besteht das Besondere des eingangs genannten Verfahrens darin, daß daß die Datenverarbeitungssysteme auf einem gemeinsamen Chip und die Überwachungsschaltung auf einem separaten Chip untergebracht werden, daß die Datenverarbeitungssysteme gemeinsam Datenworte und eine Datenwortfolge erzeugen, die zu vorgegebenen Zeitpunkten zu der Überwachungsschaltung übertragen werden und daß mit Hilfe der Überwachungsschaltung das Auftreten der einzelnen Datenworte nach Inhalt und Zeitpunkt überwacht wird.

Nach einem vorteilhaften Ausführungsbeispiel werden den Datenverarbeitungssystemen jeweils Teile der einzelnen Datenworte, die die Datenwortfolge bilden, erzeugt und die Teilworte in einem der Datenverarbeitungssysteme zu dem vollständigen Wort zusammengesetzt, das dann als Ganzes zu der Überwachungsschaltung übertragen wird.

Ein erheblicher Sicherheitsgewinn wird dadurch erreicht, daß die Teilworte in den einzelnen Datenverarbeitungssystemen nach unterschiedlichen Algorithmen erzeugt werden. Bei einer Störung, die sich auf alle Datenverarbeitungssysteme auswirkt, ist dann nicht zu erwarten, daß korrekte Teilworte, die nach dem Zusammensetzen das korrekte Datenwort ergeben, entstehen.

Es hat sich als besonders zweckmäßig erwiesen, die einzelnen Worte der Datenwortfolge mit in der Überwachungsschaltung erzeugten Worten auf inhaltliche und zeitliche Übereinstimmung zu überprüfen und ein Fehlererkennungs- und/oder Abschaltsignal dann auszulösen, wenn Abweichungen auftreten oder wenn die Abweichungen vorgegebener Grenzwerte überschreiten. Es können z.B. minimale zeitliche Abweichungen toleriert werden.

In der Überwachungsschaltung werden zweckmäßigerweise ebenfalls Teilworte gebildet und zu den vollständigen Worten zusammengesetzt, wobei wiederum die Teilworte nach unterschiedlichen Algorithmen erzeugt werden können.

Nach einem weiteren Ausführungsbeispiel der Erfindung besitzen die einzelnen Datenworte eine Länge von acht Bit und sind jeweils aus zwei Teilworten gleicher Länge zusammengesetzt. Diese Teilworte werden nach einem weiteren Ausführungsbeispiel der Erfindung in der Überwachungsschaltung durch Hardware, nämlich durch festprogrammierte Schaltungstechnik, und in den Datenverarbeitungssystmen per Software, also durch entsprechende Programmierung erzeugt, wobei eines der Teilworte nach der Beziehung (Gl.1)
WDₙ₊₁(3) aus WDₙ(2)
WDₙ₊₁(2) aus WDₙ(1)
WDₙ₊₁(1) aus WDₙ(0)
WDₙ₊₁(0) aus [WDₙ₋₁(3) XOR WDₙ(1)] XOR WDₙ(0)
und das andere Teilwort nach der Beziehung (Gl.2)
WDₙ₊₁(3) aus WDₙ(2)
WDₙ₊₁(2) aus WDₙ(1)
WDₙ₊₁(1) aus WDₙ(0)
WDₙ₊₁(0) aus WDₙ(3) XOR WDₙ(2)
gebildet werden, wobei
- (0...3): die jeweilige Stelle des 4-bit-Teilwortes,
- n: den Zeitpunkt im Arbeitstakt,
- XOR: die Logikverknüpfung "exklusiv oder" und
- aus: "ergibt sich aus" bedeuten.

Einige besonders vorteilhafte Ausführungsarten von Schaltungsanordnungen zur Durchführung des erfindungsgemäßen Verfahrens sind ebenfalls in den Unteransprüchen beschrieben. Eines dieser Beispiele besteht darin, daß auf dem gemeinsamen Chip zwei integrierte Schaltungen, die jeweils ein komplettes Datenverarbeitungssystem darstellen und über Datenleitungen miteinander verbunden sind, untergebracht sind und daß in beiden Datenverarbeitungssystemen jeweils ein Teilwort erzeugt. Ein System übernimmt dann die Zusammenfügung der Teilworte zu einem vollständigen Datenwort und die Übertragung zu der Überwachungsschaltung, wobei das andere Datenverarbeitungssystem die Steuerung der Wortübertragung zur Überwachungsschaltung übernimmt. Durch diese "Arbeitsteilung" wird die Sicherheit der Schaltung auf Basis des erfindungsgemäßen Überwachungskonzepts weiter erhöht.

Weitere Merkmale, Vorteile und Anwendungsmöglichkeiten der Erfindung gehen aus der folgenden Beschreibung von Details anhand von Ausführungsbeispielen der Erfindung hervor.

Es zeigen in schematischer Darstellungsweise
- Fig. 1: den prinzipiellen Aufbau einer Schaltungsanordnung nach der Erfindung,
- Fig. 2: die Schaltungsanordnung nach Fig. 1 mit weiteren Details der Überwachungsschaltung,
- Fig. 2A: den Verlauf eines Signals am Eingang der Überwachungsschaltung, und
- Fig. 3: ein Ausführungsbeispiel der Überwachungsschaltung nach Fig. 2.

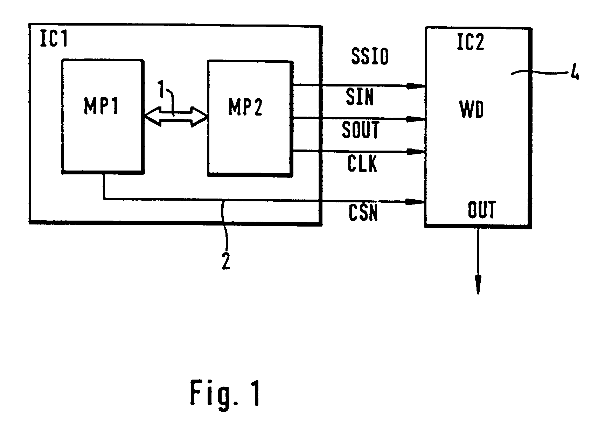

Fig. 1 dient zur Erläuterung des der Erfindung zugrunde liegenden Überwachungskonzepts. Auf einem Silicium-Chip IC1 sind in diesem Ausführungsbeispiel zwei komplette Microprozessoren MP1,MP2, Microcomputer oder andere Datenverarbeitungssysteme untergebracht. Es handelt sich beispielsweise um die beiden Microprozessoren im elektronischen Teil eines Kraftfahrzeug-Regelungssystems, wie einer Blockierschutzregelung (ABS), Antriebsschlupfregelung (ASR) oder einer Fahrstablitätsregelung (FSR). Die beiden Prozessoren oder Datenverarbeitungssysteme MP1,MP2 sind durch Datenleitungen 1 miteinander verbunden. Über eine serielle Schnittstelle SSIO ist an einen der beiden Prozessoren, hier an dem Prozessor MP2, eine Überwachungsschaltung 4, auch "Watch-Dog" (WD) genannt, angeschlossen. Ein Ausgang "OUT" führt zu einem Sicherheitsschalter, der, wenn die Überwachungsschaltung einen Fehler erkennt, die Regelung abschaltet, umschaltet und/oder ein Fehlererkennungssignal abgibt.

Schließlich ist in Fig. 1 noch eine von dem Datenverarbeitungssystem MP1 zu der Überwachungsschaltung 4 führende Signalleitung CSN dargestellt, über die die Übertragung von Daten von dem Prozessor MP2 zur Überwachungsschaltung 4 gesteuert wird; dies wird nachstehend noch näher erläutert.

Dargestellt und beschrieben sind hier nur die zur Überwachung der ordnungsgemäßen Arbeitsweise der beiden Prozessoren MP1,MP2 vorgesehenen Maßnahmen und Schaltungsteile, nicht die für die eigentliche Datenverarbeitung erforderlichen Schritte.

Zum Zwecke der Überwachung erzeugen erfindungsgemäß die beiden Microprozessoren MP1,MP2 gemeinsam Datenworte und eine Datenwortfolge, die zu der Überwachungsschaltung 4 übertragen und dort mit einer vorgegebenen Datenwortfolge bzw. mit den einzelnen Datenworten auf Übereinstimmung überprüft werden. Es wird dabei sowohl die inhaltliche Übereinstimmung der einzelnen Datenworte als auch das zeitliche Auftreten der einzelnen Datenworte überwacht. Ergeben sich Abweichungen oder überschreiten die Abweichungen vorgegebene Grenzwerte, gilt dies als Fehler und wird dies über den Ausgang OUT signalisiert.

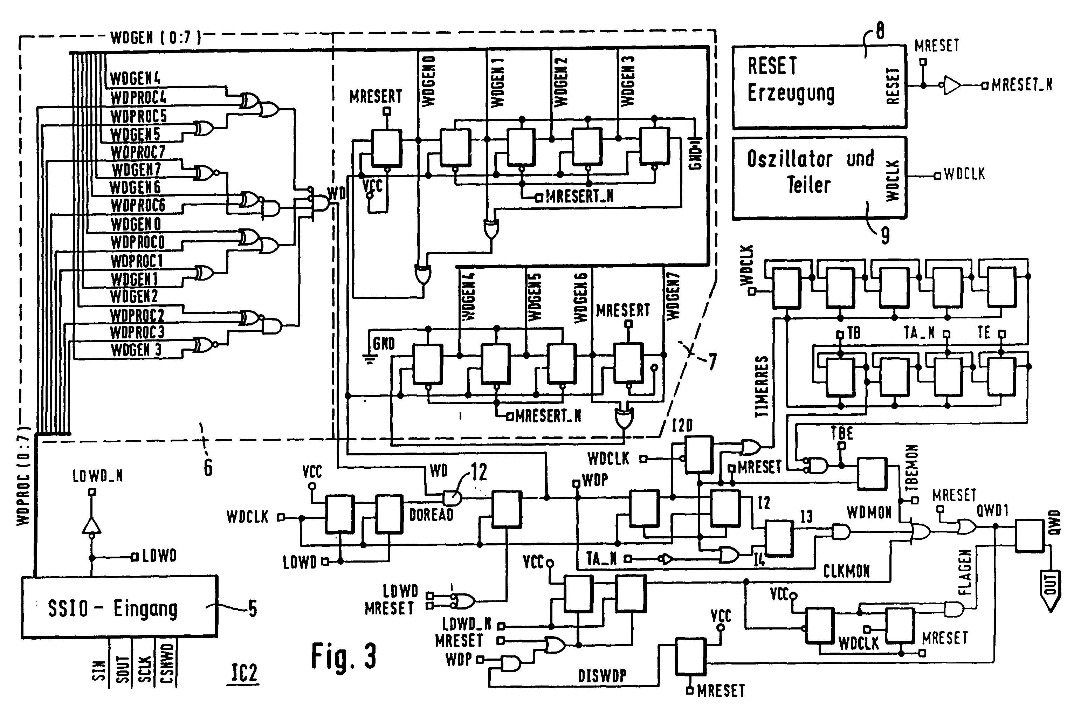

Die einzelnen Worte der Datenwortfolge werden erfindungsgemäß durch Bilden von Teilworten, die dann zu dem vollständigen Worten zusammengesetzt werden, erzeugt. In den Microprozessoren MP1,MP2 geschieht dies mit Hilfe von Software bzw. durch entsprechende Programmierung der Microprozessoren. In der Überwachungsschaltung 4 wird das entsprechende Datenwort durch festverdrahtete Schaltungselektronik gebildet, wie nachstehend anhand der Fig. 3 beschrieben wird.

Im vorliegenden Beispiel haben die einzelnen Datenworte eine Länge von 8-bit. Sie setzen sich aus zwei Teilworten von jeweils 4-bit zusammen. Die Teilworte werden in den Microprozessoren MP1,MP2 gebildet. Nach Fig. 1 übernimmt ein Microprozessor, nämlich der Microprozessor MP2, das Zusammensetzen der beiden Teilworte und die Übertragung des vollständigen Wortes über die serielle Schnittstelle SSIO zur Überwachungsschaltung 4. Der andere Microprozessor, nämlich MP1, der nicht am Zusammensetzen der Teilworte beteiligt ist, steuert über die Signalleitung 2 CSN (chip-select, N = low-aktiv) die Steuerung der Übertragung des vollständigen Wortes vom Microprozessor MP2 zur Überwachungsschaltung 4. In jedem Arbeitstakt, der in der Größenordnung von 7 ms liegen kann, wird jeweils ein vollständiges Datenwort gebildet und übertragen. Im nächsten Takt folgt ein anderes Datenwort. Die Wortfolge besteht im vorliegenden Fall, wie nachstehend noch erläutert wird, aus 210 verschiedenen Worten in endloser Folge.

Die beiden in den Prozessoren MP1,MP2 gebildeten Teilworte werden erfindungsgemäß auf Basis unterschiedlicher Algorithmen erzeugt. Dies ist für die Sicherheit bzw. Fehlererkennbarkeit bei Anwendung des erfindungsgemäßen Verfahrens von entscheidender Bedeutung.

Die Datenwortbildung läuft folgendermaßen ab:

Im Ausführungsbeispiel nach Fig. 1 wird zunächst in jedem Prozessor MP1,MP2, z.B. durch Auslesen aus seinem Programmspeicher, eine Datenwort-Hälfte gebildet. Über die parallele Datenverbindung 1 wird nun die im Microprozessor MP1 gebildete Worthälfte zum Microprozessor MP2 übertragen und dort zu dem vollständigen Datenwort zusammengesetzt. Sollte dem Microprozessor MP2 beim Zusammensetzen der Worthälften einer Fehler unterlaufen, würde das vollständige Datenwort falsch. Damit ist die Erzeugung des Datenwortes abgeschlossen. Das Wort wird nun zum exakten Zeitpunkt, z.B. nach Ablauf eines Arbeitstaktes, über die serielle Schnittstelle SSIO zu der Überwachungsschaltung 4 übertragen, die sich auf einem separaten Chip (IC2) befindet. Das Datenwort wird in ein Schieberegister der Überwachungsschaltung 4 geschoben. Die Übertragung erfolgt, sobald auf der Leitung 2 das Signal CSN ansteht; CSN ist das Signal, das das Schieberegister in der Überwachungsschaltung 4 freigibt.

In dem Ausführungsbeispiel nach Fig. 1 bestimmt der Microprozessor MP2 die Übertragung eines korrekten Wortes bzw. dessen Inhalt, der Microprozessor MP1 dagegen das zeitliche Verhalten, also das Übertragen zum richtigen Zeitpunkt. In der Überwachungsschaltung 4 wird dann das übertragene Wort mit dem vorgegebenen Wort auf Übereinstimmung verglichen. Ist dies der Fall, wird in jedem Takt auf das nächste Wort umgeschaltet und dieses sodann in einem vorgegebenen Zeitfenster ausgewertet.

Natürlich ist es auch möglich, daß der Microprozessor MP2 die komplette Übertragung, einschließlich CSN, übernimmt; die Sicherheit der Fehlererkennung wäre in diesem Fall geringer.

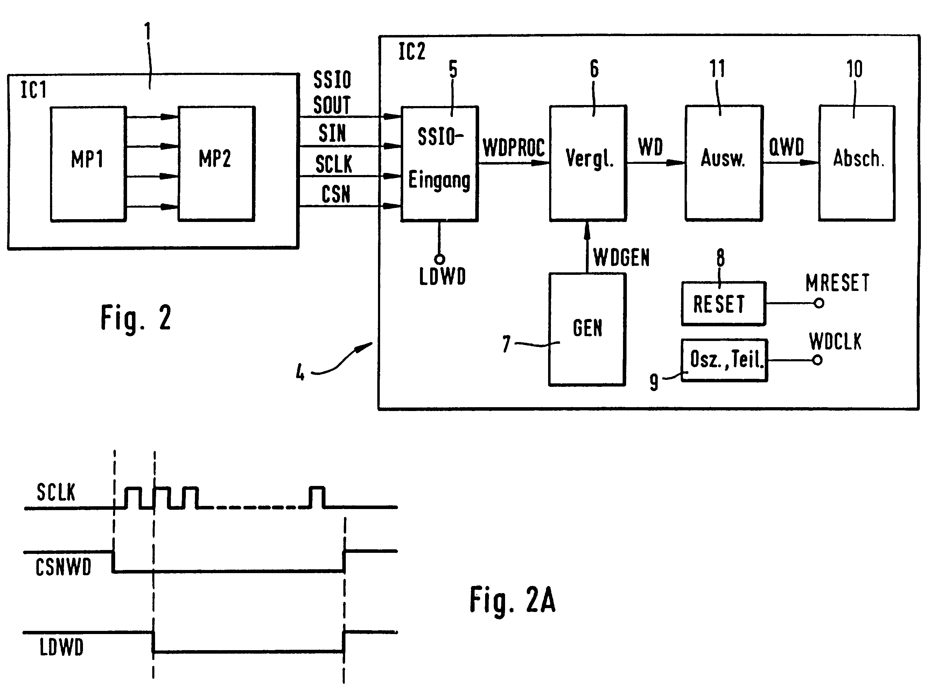

In Fig. 2 sind die zur Überwachungsschaltung 4 gehörenden, auf dem gemeinsamen Chip IC2 untergebrachten Baugruppen dargestellt. Die in den Microprozessoren MP1,MP2 gemeinsam erzeugten Datenworte der Datenwortfolge werden über die serielle Schnittstelle in das Schieberegister und den Zwischenspeicher, die zu dem SSIO-Eingang 5 gehören, übertragen. In einem Vergleicher 6 werden die einzelnen Datenworte WDPROC mit den vorgegebenen, in der Überwachungsschaltung 4 mit Hilfe des Generators (GEN) 7 erzeugten Worten WDGEN verglichen. Eine Schaltung 8 zur Erzeugung der RESET-Signale sowie ein Oszillator und Teiler 9 zur Erzeugung des Arbeitstaktes WDCLK sind ebenfalls dargestellt.

In der Überwachungsschaltung 4 (IC2) werden mit Hilfe einer festverdrahteten Logik-Schaltung Datenworte, die die vorgegebene Datenwortfolge ergeben, gebildet und mit den zu dieser Schaltung übertragenen, in den Microprozessoren MP1,MP2 durch Software erzeugten Datenworten und Datenwortfolge auf Übereinstimmung verglichen. Die Auswertung des Vergleichsergebnisses (WD) geschieht mit Hilfe einer Auswerteschaltung 11. Eine Schaltung 10 enthält eine sogenannte Sicherheitsabschaltung.

Fig. 3 dient zur näheren Erläuterung eines Ausführungsbeispiels der Überwachungsschaltung 4 nach Fig. 1 und 2. Im einzelnen ist folgender Aufbau und folgende Wirkungsweise gegeben:

Die im Prozessor-Schaltkreis (IC1) gebildeten Datenworte oder Watch-Dog-Worte werden in definierten Zeitabständen, nämlich im Arbeitstakt, über die serielle Schnittstelle SSIO (Leitungen: SIN, SOUT, SCK, CSN) zur Eingangsstufe 5 der Überwachungsschaltung 4 übertragen. Die am Anschluß SIN anstehenden Daten werden mit dem Takt SCLK in das Eingangsschieberegister der Eingangsschaltung 5 geschoben. Mit der steigenden Flanke des low-aktiven CSN-Signals werden die in diesem Eingangsschieberegister enthaltenen Daten parallel in einen Zwischenspeicher, der sich ebenfalls in der Eingangsschaltung 5 befindet, geschrieben und stehen sodann als 8-bit-Datenwort WDRPOC(0:7) auf einem Bus für eine Auswertung zur Verfügung. Das von der Eingangsschaltung 5 zur Verfügung gestellte Signal LDWD ergibt sich aus den Signalen CSNWD und SCLK in der in Fig. 2A dargestellten Weise.

Das von den Microprozessoren MP1,MP2 stammende Datenwort WDPROC(0:7) wird nun mit Hilfe des Vergleichers 6 mit dem in der Überwachungsschaltung 4 generierten Datenwort WDGEN(0:7) verglichen. Das Signal WD am Ausgang des Vergleichers 6 ist '1', wenn beide Datenworte gleich sind.

In der Überwachungsschaltung 4 wird das 8-bit-Datenwort ebenso wie das mit Hilfe der Prozessoren MP1,MP2 bzw. in dem Chip IC1 gebildete Datenwort aus zwei Teilworten, die jeweils eine Breite von 4-bit haben, erzeugt. Das erste der in der Überwachungsschaltung 4 erzeugten Teilworte WDGEN(0:3) wird von den oberen fünf und das zweite Teilwort WDGEN(4:7) von den darunterliegenden vier Flip-Flops und den jeweiligen Exklusiv- Oder-Rückkopplungen erzeugt. Dieser Watch-Dog-Generator wird mit einem Puls WDP getaktet und erzeugt bei jeder steigenden Taktflanke in Abhängigkeit von dem aktuellen Datenwort ein neues Datenwort. Durch die Art der Rückkopplung werden die Worte der Wortfolge und die Länge der Wortfolge bestimmt. Im vorliegenden Ausführungsbeispiel besteht die Wortfolge des ersten Teilwortes aus 14 verschiedenen und die Länge des zweiten Teilwortes aus 15 verschiedenen 4-bit-Worten. Diese Watch-Dog-Generator-Worte WDGEN werden nach den im folgenden wiedergegebenen Algorithmen erzeugt. Für das erste Teilwort WDGEN(0:3) gilt die Beziehung Gl.1:
WDₙ₊₁(3) aus WDₙ(2)
WDₙ₊₁(2) aus WDₙ(1)
WDₙ₊₁(1) aus WDₙ(0)
WDₙ₊₁(0) aus [WDₙ₋₁(3) XOR WDₙ(1)] XOR WDₙ(0)
und für das andere Teilwort die Beziehung Gl.2:
WDₙ₊₁(3) aus WDₙ(2)
WDₙ₊₁(2) aus WDₙ(1)
WDₙ₊₁(1) aus WDₙ(0)
WDₙ₊₁(0) aus WDₙ(3) XOR Wdₙ(2),
wobei die Abkürzungen folgende Bedeutung haben:
WD = WDGEN = Watch-Dog-Datenwort, erzeugt durch den Generator GEN,
- 0...3: jeweilige Stelle des 4-bit-Teilwortes,
- n: Zeitpunkt im Arbeitstakt,
- XOR: Logikverknüpfung "Exklusiv Oder",
- aus: steht für "ergibt sich aus".

Die Algorithmen (Gl.1,Gl.2) für die Bildung der beiden Teilworte sind somit voneinander verschieden. Durch die Zusammensetzung des vollständigen Wortes aus den beiden Teilworten, die jeweils eine Wortfolge aus 14 verschiedenen bzw. 15 verschiedenen 4-bit-Worten bilden, ergibt sich insgesamt eine endlose Folge aus 210 verschiedenen, aus den 4-bit-Teilworten zusammengesetzten 8-bit-Datenworten; dies veranschaulicht die nachstehende Tabelle:
Anfangswort (1): 1 000 0001

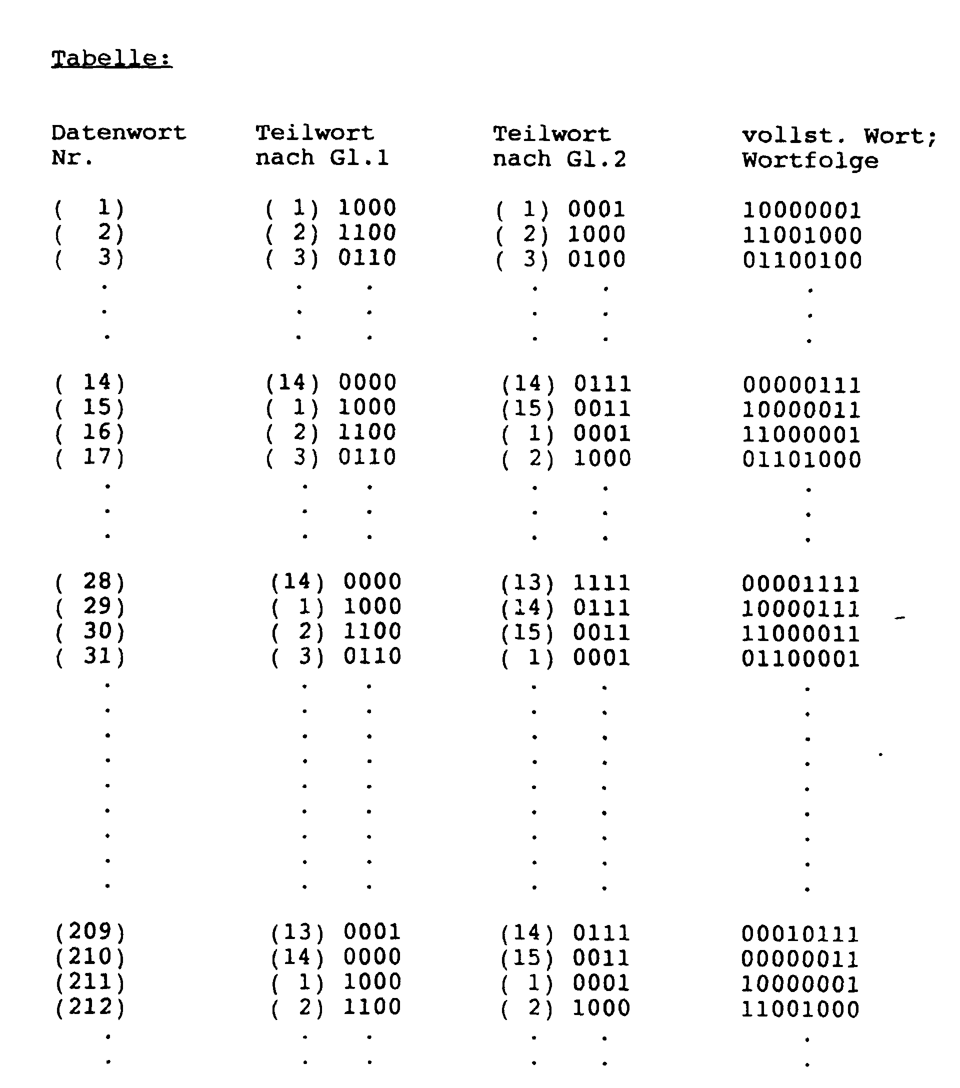

Für diese endlose Folge aus 210 verschiedenen Datenwörtern gilt die Formel:
Wₙ = W _{(n+m · 210)}
Wₙ = n-tes Wort der 8-bit-Datenwortfolge
n,m = natürliche Zahlen 1, 2, 3.....

Während des Reset werden die Flip-Flops des Watch-Dog-Generators mit dem Anfangswort der Wortfolge '1000 0001' belegt.

Nach einer Zeitspanne von 1 bis 2 Perioden des Arbeitstaktes WDCLK der Prüfschaltung 4 wird nach einer ansteigenden Flanke des von der Eingangsschaltung 5 zur Verfügung gestellten Signals LDWD das Signal DOREAD am Eingang eines UND-Gatters 12 zu '1', wodurch der in der Schaltung 6 erfolgende Vergleich zwischen dem von den Prozessoren gelieferten Datenwort WDPROC(1:7) mit dem in der Prüfschaltung generierten Datenwort WDGEN(1:7) bzw. das Vergleichsergebnis WD ausgewertet wird. Mit der nächsten steigenden Flanke des Taktes WDCLK wird WDP entsprechend gesetzt. Stimmen beide Datenworte überein, so wird WDP = '1'. Durch die dadurch entstehende 0-1-Flanke des WDP-Signals schaltet der Watch-Dog-Generator auf das nächste Watch-Dog-Wort um. WDPROC(0:7) steht zu diesem Zeitpunkt noch auf dem vorhergehenden Wort. Somit wird WD = '0'. Mit der nächsten steigenden Flanke des Taktes WDCLK wird WDP wieder '0'. WDP ist demzufolge exakt für eine Periode des Taktes WDCLK = '1'.

Durch Signale TB, TA.N und TE wird ein Zeitfenster für den Watch-Dog-Puls WDCLK definiert. Diese drei Signale werden mit Hilfe eines 9-stufigen Timers, der mit WDCLK getaktet wird, erzeugt. Das Signal TIMERRES setzt den Timer zurück (TB ='1', TA_N = '1', TE = '1'). Der Anfang des Zeitfensters ist erreicht, wenn TA_N zum ersten mal '0' wird. Unter Berücksichtigung, daß das Signal TIMERRES synchron mit der fallenden Flanke des Pulses WDCLK freigegeben wird (d.h. '0' wird), ereignet sich dies nach exakt 127,5 WDCLK-Pulsen. Das Ende des Zeitfensters wird erreicht, wenn TBE das erste mal '1' wird (nach 287,5 WDCLK-Pulsen).

Nach dem Reset (Signal MRESET) der gesamten Watch-Dog- bzw. Überwachungsschaltung ist das Signal QWD am Ausgang der Auswerteschaltung 11 null, d.h. QWD = '0'; über den Ausgang OUT nimmt ein Sicherheitsschalter seine Position "abgeschaltet" oder "Fehler erkannt" ein. Erst nachdem das 2. Watch-Dog-Signal bzw. das 2. Datenwort korrekt übertragen wurde, wird QWD durch eine '1' am Signal FLAGEN auf '1' geschaltet.

Das Signal I2 ist nach dem Reset '0'. Somit ist das zwischen I2 und I3 liegende RS-Flip-Flop ausgangsseitig auf '0' gestellt. Die Erkennung eines zu früh kommenden Watch-Dog-Pulses WDP ist auf diese Art und Weise ausgeschaltet. Dies bedeutet, daß das erste Watch-Dog- bzw. Datenwort sofort nach dem Reset gesendet werden darf. Für alle folgenden Datenworte ist der Anfang des Zeitfensters ebenso wie das Zeitfenster-Ende relevant, weil das RS-Flip-Flop jeweils vom vorhergehenden Watch-Dog-Puls WDP auf '1' gesetzt und erst beim Erreichen des Zeitfenster-Anfangs auf '0' zurückgesetzt wird. Kommt ein Watch-Dog-Puls WDP zu früh, d.h., während I3 = '1' ist, so wird QWD1 = '1', und QWD wird demzufolge auf '0' gesetzt, was wiederum "Sicherheitsabschaltung" bzw. "Fehlererkennung" bedeutet.

Werden die Watch-Dog- bzw. Datenworte ständig korrekt entsprechend dem vorgegebenen Zeitfenster gesendet, so wird das Signal TBE niemals '1', da der Timer vor dem Erreichen des Zeitfenster-Endes jeweils erneut durch den Watch-Dog-Puls WDP zurückgesetzt wird. Wenn jedoch der Endpunkt des Zeitfensters überschritten wird, wird TBE = '1' und dadurch das nachfolgende RS-Flip-Flop gesetzt. Eine '1' an TBEMON führt zu einem Zurücksetzen des Ausgangs-Flip-Flops. Das Ausgangssignal QWD wird demzufolge '0' und die Sicherheitabschaltung ausgelöst.

Ein falsches Watch-Dog-Wort bzw. Datenwort führt nicht zu einem Watch-Dog-Puls WDP. Die Fehlererkennung und Sicherheitsabschaltung erfolgt in diesem Fall in Abhängigkeit von dem Zeitpunkt, zu dem das falsche Datenwort gesendet wird sowie in Abhängigkeit davon, ob dem falschen Datenwort noch ein richtiges Datenwort innerhalb des Zeitfensters folgt; dies erläutern die folgenden Beispiele.

### Beispiel 1:

Ein falsches Datenwort wird zwischen zwei korrekten Datenworten gesendet, wobei das zweite Datenwort noch vor Ablauf des Zeitfensters (TBE = '1') übertragen wird. In diesem Fall nimmt mit der fallenden Flanke des zum 2. Datenwort gehörenden Chip-Select-Signals CSNWD das Signal CLKMON den Wert '1' an. Dadurch wird das Ausgangs-Flip-Flop zurückgesetzt.

### Beispiel 2:

In diesem Fall wird bis zum Erreichen des Zeitfenster-Endpunktes (TBE = '1') kein korrektes Datenwort gesendet. Da das falsche Datenwort keinen Watch-Dog-Puls WDP erzeugt, nimmt der Ausgang TBEMON den Wert '1' an. Es erfolgt daher Fehlererkennung bzw. Sicherheitsabschaltung wegen dieser Zeitüberschreitung.

Erfindungsgemäß werden also die Datenworte in der Überwachungsschaltung sowohl hinsichtlich ihres korrekten Inhalts als auch des Zeitpunkts ihres Auftretens überwacht.

## Patentansprüche

1. Verfahren zur Überwachung einer Datenverarbeitungsschaltung, die zwei oder mehrere, durch Datenleitungen verbundene Datenverarbeitungssysteme, wie Microprozessoren, Microcomputer oder dergl., enthält, wobei in den Datenverarbeitungssystemen gewonnene Daten einer Überwachungsschaltung zugeführt werden, dadurch **gekennzeichnet**, daß die Datenverarbeitungssysteme (MP1,MP2) auf einem gemeinsamen Chip (IC1) und die Überwachungsschaltung (4) auf einem separaten Chip (IC2) untergebracht werden, daß die Datenverarbeitungssysteme (MP1,MP2) gemeinsam Datenworte und eine Datenwortfolge (WDPROC) erzeugen, die zu vorgegebenen Zeitpunkten zu der Überwachungsschaltung (4) übertragen werden und
daß mit Hilfe der Überwachungsschaltung (4) das Auftreten der einzelnen Datenworte nach Inhalt und Zeitpunkt überwacht wird.

2. Verfahren nach Anspruch 1, dadurch **gekennzeichnet,** daß in den Datenverarbeitungssystemen (MP1,MP2) jeweils Teile der einzelnen Datenworte der Datenwortfolge erzeugt werden, daß die Teilworte in einem (MP2) der Datenverarbeitungssysteme zu dem vollständigen Wort zusammengesetzt und von diesem Datenverarbeitungssystem als Ganzes zu der Überwachungsschaltung übertragen werden.

3. Verfahren nach Anspruch 2, dadurch **gekennzeichnet**, daß die Teilworte in den Datenverarbeitungssystemen nach unterschiedlichen Algorithmen erzeugt werden.

4. Verfahren nach einem oder mehreren der Ansprüche 1 - 3, dadurch **gekennzeichnet,** daß die einzelnen Worte der Datenwortfolge (WDPROC) mit in der Überwachungsschaltung (4) erzeugten Worten (WDGEN) auf inhaltliche und zeitliche Übereinstimmung überprüft werden und daß ein Fehlererkennungs- und/oder Abschaltsignal ("OUT") ausgelöst wird, wenn Abweichungen auftreten oder wenn die Abweichungen vorgegebene Grenzwerte überschreiten.

5. Verfahren nach einem oder mehreren der Ansprüche 1 - 4, dadurch **gekennzeichnet**, daß in der Überwachungsschaltung (4) Teilworte gebildet und zu den vollständigen Worten zusammengesetzt werden.

6. Verfahren nach Anspruch 5, dadurch **gekennzeichnet**, daß die Teilworte in der Überwachungsschaltung (4) unabhängig voneinander nach unterschiedlichen Algorithmen erzeugt werden.

7. Verfahren nach einem oder mehreren der Ansprüche 1 - 6, dadurch **gekennzeichnet**, daß die Teilworte und Datenwortfolgen in den Datenverarbeitungssystemen (MP1,MP2) durch Programmierung der Datenverarbeitungssysteme (MP1,MP2) und in der Überwachungsschaltung (4) mit Hilfe von festverdrahteten elektronischen Schaltungen gebildet werden.

8. Verfahren nach einem oder mehreren der Ansprüche 1 - 7, dadurch **gekennzeichnet**, daß die einzelnen Datenworte der Wortfolgen 8 Bit umfassen und jeweils aus zwei Teilworten gleicher Länge zusammengesetzt werden.

9. Verfahren nach Anspruch 8, dadurch **gekennzeichnet**, daß in der Überwachungsschaltung (4) sowie mit Hilfe der Datenverarbeitungssysteme (MP1,MP2) jeweils eines der Teilworte nach der Beziehung (Gl.1)
WDₙ₊₁(3) aus WDₙ(2)
WDₙ₊₁(2) aus WDₙ(1)
WDₙ₊₁(1) aus WDₙ(0)
WDₙ₊₁(0) aus [WDₙ₋₁(3) XOR WDₙ(1)] XOR WDₙ(0)
und das andere Teilwort nach der Beziehung (Gl.2)
WDₙ₊₁(3) aus WDₙ(2)
WDₙ₊₁(2) aus WDₙ(1)
WDₙ₊₁(1) aus WDₙ(0)
WDₙ₊₁(0) aus WDₙ(3) XOR WDₙ(2)
gebildet werden, wobei
(0...3) die jeweilige Stelle des 4-Bit-Teilwortes,
n den Zeitpunkt im Arbeitstakt,
XOR die Logikverknüpfung "exklusiv oder" und
aus "ergibt sich aus" bedeuten.

10. Schaltungsanordnung zur Durchführung des Verfahrens nach einem oder mehreren der Ansprüche 1 bis 9, dadurch **gekennzeichnet**, daß diese aus zwei auf einem gemeinsamen Chip (IC1) untergebrachten integrierten Schaltungen, die jeweils ein komplettes Datenverarbeitungssystem (MP1,MP2) darstellen und über Datenleitungen miteinander verbunden sind, besteht, daß in den beiden Datenverarbeitungssystemen (MP1,MP2) jeweils ein Teilwort erzeugt wird, das zusammen mit dem im zweiten Datenverarbeitungssystem erzeugten Teilwort ein vollständiges Datenwort ergibt, und daß von einem der beiden Datenverarbeitungssysteme (MP2) die Teilworte zusammengesetzt und als Ganzes zu der Überwachungsschaltung (4) übertragen werden.

11. Schaltungsanordnung nach Anspruch 10, dadurch **gekennzeichnet**, daß das andere Datenverarbeitungssystem (MP1) die Übertragung des vollständigen Datenwortes von dem Datenverarbeitungssystem (MP2), das die Teilworte zusammensetzt, zu der Überwachungsschaltung (4) steuert.

12. Schaltungsanordnung nach Anspruch 10 oder 11, dadurch **gekennzeichnet**, daß die Überwachungsschaltung (4) in Form einer festverdrahteten Logikschaltung ausgebildet ist, die die Teilworte auf Basis unterschiedlicher Algorithmen bildet, die Teilworte zu vollständigen Datenworten (WDGEN) zusammensetzt und mit den einzelnen, in den Datenverarbeitungssystemen (MP1,MP2) erzeugten einzelnen Worten (WDPROC) der Datenwortfolge vergleicht.

## Claims

1. Method of monitoring a data processing circuit which includes two or a plurality of data processing systems such as microprocessors, microcomputers, or the like, which are connected by data lines, and data produced in the data processing systems are sent to a monitoring circuit,
**characterized** in that the data processing systems (MP1, MP2) are mounted on a joint chip (IC1) and the monitoring circuit (4) is mounted on a separate chip (IC2), in that the data processing systems (MP1, MP2) jointly produce data words and a data word sequence (WDPROC) which are transmitted at predetermined times to the monitoring circuit (4), and in that the appearance of the individual data words is checked by the monitoring circuit (4) with respect to their contents and timing.

2. Method as claimed in claim 1,
**characterized** in that parts of the individual data words of the data word sequence are produced in the data processing systems (MP1, MP2), in that the partwords are put together in one (MP2) of the data processing systems to a complete word which, as a whole, is then transmitted to the monitoring circuit by the data processing system.

3. Method as claimed in claim 2,
**characterized** in that the partwords are produced according to different algorithms in the data processing systems.

4. Method as claimed in any one or more of claims 1 to 3,
**characterized** in that the individual words of the data word sequence (WDPROC) are checked for correlation with respect to contents and timing with words (WDGEN) generated in the monitoring circuit (4), and in that an error detection signal and/or deactivation signal ("OUT") is triggered when differences occur, or when the differences exceed predetermined limit values.

5. Method as claimed in any one or more of claims 1 to 4,
**characterized** in that partwords are produced in the monitoring circuit (4) and put together to complete words.

6. Method as claimed in claim 5,
**characterized** in that the partwords are generated in the monitoring circuit (4) irrespective of each other according to different algorithms.

7. Method as claimed in any one or more of claims 1 to 6,
**characterized** in that the partwords and data word sequences are produced in the data processing systems (MP1, MP2) by programming the data processing systems (MP1, MP2) and are produced in the monitoring circuit (4) by hard-wired electronic circuits.

8. Method as claimed in any one or more of claims 1 to 7,
**characterized** in that the individual data words of the word sequences have a length of 8 bit and are composed of two partwords of equal length each.

9. Method as claimed in claim 8,
**characterized** in that, in the monitoring circuit (4) and by means of the data processing systems (MP1, MP2), one of the partwords is produced according to the relation (Gl.1)
Wdₙ₊₁(3) from WDₙ(2)
Wdₙ₊₁(2) from WDₙ(1)
Wdₙ₊₁(1) from WDₙ(0)
Wdₙ₊₁(0) from [WDₙ₋₁(3) XOR WDₙ(1)] XOR WDₙ(0)
and the other partword is produced according to the relation (Gl.2)
Wdₙ₊₁(3) from WDₙ(2)
Wdₙ₊₁(2) from WDₙ(1)
Wdₙ₊₁(1) from WDₙ(0)
Wdₙ₊₁(0) from WDₙ(3) XOR WDₙ(2)
wherein
(0...3) is the respective place of the 4-bit partword,
n is the point of time in the working clock,
XOR is the logic linking "exclusive OR", and
from implies "results from".

10. Circuitry for implementing the method as claimed in any one or more of claims 1 to 9,
**characterized** in that the circuitry includes two integrated circuits, mounted on one joint chip (IC1), each circuit representing a complete data processing system (MP1, MP2), and being interconnected by data lines, in that one partword is produced in each of the two data processing systems (MP1, MP2), and the partword along with the partword produced in the second data processing system will then result in a complete data word, and in that one of the two data processing systems (MP2) joins the partwords and transmits the complete word to the monitoring circuit (4).

11. Circuitry as claimed in claim 10,
**characterized** in that the other data processing system (MP1) governs the transmission of the complete data word from the data processing system (MP2), which joins the partwords, to the monitoring circuit (4).

12. Circuitry as claimed in claim 10 or claim 11,
**characterized** in that the monitoring circuit (4) is configured as a hard-wired logic circuit which produces the partwords on the basis of different algorithms, joins the partwords to complete data words (WDGEN) and compares them with the individual words (WDPROC) of the data word sequence produced in data processing systems (MP1,MP2).

## Revendications

1. Procédé pour contrôler un circuit de traitement de données, qui contient deux ou plusieurs systèmes de traitement de données reliés par des lignes de transmission de données, comme des microprocesseurs, des micro-ordinateurs ou analogues, des données obtenues dans les systèmes de traitement de données étant envoyées à un circuit de contrôle, caractérisé en ce que le système de traitement de données (MP1,MP2) est disposé sur une plaquette commune (IC1) et que le circuit de contrôle (4) est disposé sur une plaquette séparée (IC2),
que les systèmes de traitement de données (MP1,MP2) produisent en commun des mots de données et une suite de mots de données (WDPROC), qui sont transmis à des instants prédéterminés au circuit de contrôle (4), et
que l'apparition des mots de données individuels est contrôlée, en ce qui concerne le contenu et l'instant, à l'aide du circuit de contrôle (4).

2. Procédé selon la revendication 1, caractérisé en ce que des parties des mots individuels de données de la suite de mots de données sont respectivement produites dans les systèmes de traitement de données (MP1,MP2), que les mots partiels sont rassemblés dans l'un (MP2) des systèmes de traitement de données pour former le mot complet et sont transmis dans leur ensemble, par ce système de traitement de données, au circuit de contrôle.

3. Procédé selon la revendication 2, caractérisé en ce que les mots partiels sont produits dans les systèmes de traitement de données selon des algorithmes différents.

4. Procédé selon une ou plusieurs des revendications 1 à 3, caractérisé en ce que les différents mots de la suite de mots de données (WDPROC) sont contrôlés, pour déterminer si leurs contenus coïncident et s'ils coïncident dans le temps, avec des mots (WDGEN) produits dans le circuit de contrôle (4), et qu'un signal d'identification d'erreur et/ou d'interruption ("OUT") est déclenché lorsque des écarts apparaissent ou lorsque les écarts dépassent des valeurs limites prédéterminées.

5. Procédé selon une ou plusieurs des revendications 1-4, caractérisé en ce que des mots partiels sont formés dans le circuit de contrôle (4) et sont rassemblés pour former des mots complets.

6. Procédé selon la revendication 5, caractérisé en ce que des mots partiels sont produits indépendamment les uns des autres dans le circuit de contrôle (4), selon des algorithmes différents.

7. Procédé selon une ou plusieurs des revendications 1-6, caractérisé en ce que les mots partiels et les suites de mots de données sont formés dans les systèmes de traitement de données (MP1,MP2) par programmation des systèmes de traitement de données (MP1,MP2) et dans le circuit de contrôle (4) à l'aide de circuits électroniques à câblage fixe.

8. Procédé selon une ou plusieurs des revendications 1-7, caractérisé en ce que les différents mots de données des suites de mots comprennent 8 bits et sont formés par la réunion respectivement de deux mots partiels de même longueur.

9. Procédé selon la revendication 8, caractérisé en ce que dans le circuit de contrôle (4) respectivement l'un des mots partiels correspondant à la relation (relation 1)
WDₙ₊₁ (3) aus WDₙ(2)
WDₙ₊₁ (2) aus WDₙ(1)
WDₙ₊₁ (1) aus WDₙ(0)
WDₙ₊₁ (0) aus [WDₙ₋₁(3) XOR WDₙ(1)] XOR WDₙ(0)
et l'autre mot partiel est formé conformément à la relation (relation 2)
WDₙ₊₁ (3) aus WDₙ(2)
WDₙ₊₁ (2) aus WDₙ(1)
WDₙ₊₁ (1) aus WDₙ(0)
WDₙ₊₁ (0) aus WDₙ(3) XOR WDₙ(2)
avec les significations suivantes
(0...3) la position respective du mot partiel à 4 bits,
n l'instant dans la cadence de travail,
XOR la combinaison logique "ou-exclusif" et
aus "à partir de".

10. Montage pour la mise en oeuvre du procédé selon une ou plusieurs des revendications 1 à 9, caractérisé en ce que ce montage est constitué par deux circuits intégrés, qui sont disposés sur une plaquette (IC1) commune, représentent respectivement un système complet de traitement de données (MP1,MP2) et sont reliés entre eux par l'intermédiaire de lignes de transmission de données, que dans les deux systèmes de traitement de données (MP1,MP2) est produit respectivement un mot partiel, qui fournit, en association avec le mot partiel produit dans le second système de traitement de données, un mot de données complet et que les mots partiels sont réunis par l'un des deux systèmes de traitement de données (MP2) et sont transmis en bloc au circuit de contrôle (4).

11. Montage selon la revendication 10, caractérisé en ce que l'autre système de traitement de données (MP1) commande la transmission de l'ensemble du mot de données depuis le système de traitement de données (MP2), qui assemble les mots partiels, au circuit de contrôle (4).

12. Montage selon la revendication 10 ou 11, caractérisé en ce que le circuit de contrôle (4) est agencé sous la forme d'un circuit logique à câblage fixe, qui forme les mots partiels sur la base d'algorithmes différents, réunit les mots partiels pour former des mots de données complets (WDGEN) et les compare aux mots individuels (WDPROC), produits dans les systèmes de traitement de données (MP1,MP2), de la suite de mots de données.
